# EUROPEAN PATENT APPLICATION

(11) **EP 4 187 873 A1**
(43) Date of publication of application: **31.05.2023**
(21) Application number: 21210911.0
(22) Date of filing: 27.11.2021
(51) Int. Cl.: H04L 61/00

(54) **EFFICIENT PROPAGATION OF UNIVERSAL AND MACHINE READABLE CONTROL FLOWS**

(71) Applicant: ZOE Life Technologies AG, 9100 Herisau (CH)
(72) Inventor: Pollert, Heiner, 80331 München (DE)
(74) Representative: Reich, Jochen

(57) **Abstract**

The present invention is directed towards a method that allows to communicate with remote machines efficiently over existing networks. The invention defines a novel technique of addressing hardware components in an efficient way. Machines can be operated using a predefined control flow that can be sent in a secure manner and at little effort. The invention is furthermore directed towards a respectively arranged system along with a computer program product and a computer-readable medium.

## Description

The present invention is directed towards a method that allows to communicate with remote machines efficiently over existing networks. The invention defines a novel technique of addressing hardware components in an efficient way. Machines can be operated using a predefined control flow that can be sent in a secure manner and at little effort. The invention is furthermore directed towards a respectively arranged system along with a computer program product and a computer-readable medium.

EP 1 714 445 B1 shows communication systems, and more particularly configuring addresses in a packet switched communication system for communication network elements, such as telecommunication equipment.

EP 2 751 955 B1 shows a resource manager, system, and method for communicating resource management information for smart energy and media resources using IPv6.

The Internet Protocol version 6, IPv6 for short, is commonly known in the art and is used for addressing web sites, hosts, servers and in general internet resources. More sophisticated approaches address machines such as robots or technical devices from the domain of the internet of things. In general IPv6 addresses are represented as eight groups, separated by colons, of four hexadecimal digits. IPv6 provides an Internet Layer protocol for packetswitched internetworking and moreover provides end-to-end datagram transmission across multiple IP networks.

Existing techniques transmit control instructions using interfaces that typically rely on internet protocols. The state of the art distinguishes between signaling data or meta data and payload. Typically these data sets are coded separately. When a remote machine is addressed remote method invocation or transferring the code may be accomplished. However, sending control instructions as such results in a larger bandwidth usage. Moreover, different versions of code need to be handled and different instruction sets are supported by receiving device. In case the receiving device does not support a specific control instruction set it cannot performed the instructed tasks.

What is required is an alternative solution to those commonly known techniques that is efficient and easy to use. For instance already deployed hardware components should be further used without bigger adaptions.

Accordingly it is an object of the present invention to provide a method for efficient communication over a network at little technical effort. It is also an object of the present invention to provide a system arrangement being designed in accordance with the suggested method. Moreover, it is an object of the present invention to provide a respectively arranged computer program product and a computer-readable medium.

The object is solved by the subject-matter according to claim 1.

Accordingly, a computer-implemented method for efficiently propagating universal and machine readable control flows over a computer network is suggested, comprising the steps of providing at least two command sets, each command set comprising control instructions for hardware components; assigning to each of the provided command sets a unique number specified in an IPv6 address block, said address block being a second level block or a higher level block; assigning to each control instruction an IPv6 sub-address of said at least second level block; arranging the IPv6 sub-addresses in a sequence that indicate a control flow for the hardware component; and transmitting the control flow to the hardware component for its configuration and/ or operation.

The computer-implemented method for efficiently propagating creates instructions that can be sent over a network with already existing techniques. Hence, there is no new infrastructure required and the invention makes use of already available network components such as servers and routers. The invention can address and instruct any device with a respective interface in one single or several IP addresses. IPv6 is merely understood as an example and any internet protocol, especially IPv4 is suitable as well. However, the inventors found out that the most benefits are reached using IPv6.

The addresses form universal and machine readable control flows and are transmitted over a computer network. The instructions are universal as they are translated or mapped onto IP addresses, which is commonly understood by respective devices. In this way any instruction or generally speaking instance can be transmitted. It is of advantage to provide a reference, for instance a table or data base, which lists the number of the concept and indicates the instance itself. For instance in case an instruction "set frame rate" is assigned the number 5, the transmitted IP address may contain the address of the device and a data field containing the number 5. Hence, only one single IP address is transmitted and the receiver knows that in case instruction number 5 is received the instruction "set frame rate" is to be accomplished. Further fields or generally speaking information in the IP address may provide a parameter, such as the frame rate. All this can be stored in a database on both sides and hence the sender can code the instruction in the IP address, transmit the same and the receiver accomplishes this instruction.

According to the present invention a flow of several instructions can be coded, each IP address providing an instruction, optionally the address and optionally the parameter. In this way several instructions are provided by a sequence of IP addresses. In case the address is not provided in the IP address carrying the receiver address a further addressing means is to be created, such as a further IP address. However, the internet protocol provides means such as unused data blocks or header fields, which can be used according to the present invention.

Providing at least two command sets provides the possibility to define several spaces for providing instruction sets. For instance one first instruction set or command set may describe the programming language assembler and one further instructions set may describe java. Hence, it can be indicated which command set is addressed by the IP address. Hence, one block can be reserved which indicates the command set. One may define for instance in the sixth block a number referring to the command set and in a lower level block, for instance the 5^{th} block which command is transmitted. Also natural language can be transmitted in this language, where one block specifies the language and another block codes the word.

With each command set comprising control instructions for hardware components the instructions can be coded. Also the block indicating the commend set might provide different versions of control instructions and hence the command set. Hence, one can reserve one block for the version number and other blocks for the instruction. In this way the hardware can be addressed using different versions of the same command set.

Assigning to each of the provided command sets a unique number specified in an IPv6 address block allows the user to set numbers for different command sets or command sets of several versions. A number in the present context refers to an identifier. The number might not be specified in a decimal system. It is of advantage to use a hexa decimal system such that the number can be specified by an alphanumeric string.

The address block being a second level block or a higher level block indicates that lower blocks can be reserved for the address of the receiver. For instance the present invention can use two highest blocks, such that still space for the addressee remains. The blocks are counted from right to left such that the instructions are coded in one or several sub blocks of the command set indication. In this way the command set block defines a subdomain for instructions.

Assigning to each control instruction an IPv6 sub-address of said at least second level block provides the advantage that in this subdomain the instructions can be indicated. Hence, the overall address contains the command set indication and in the sub-address the instruction. For instance in case version 2 of a command set is indicated and instruction 5 is addressed to receiver 7 a part of the IPv6 address may read 0002 0005 0007. Further information may be coded on the left or right.

Arranging the IPv6 sub-addresses in a sequence that indicate a control flow for the hardware component is accomplished by sending the IPv6 addresses in a specific order. In case the packages are rearranged due to different speeds of network paths the IPv6 address may likewise define a sequence number such that the packages or IPv6 addresses can be rearranged to the intended order. In case instructions 7, 8 and 9 shall be implemented the following parts shall be included in three separate IP addresses: 0002 0007 0007, 0002 0008 0007, 0002 0009 0007. In case version 3 of the command set shall apply for instruction 2 the address may contain 0003 0002 0007.

Transmitting the control flow to the hardware component for its configuration and/ or operation instructs the hardware to carry out the transmitted instructions. For instance the receiver holds a database indicating that instruction number 2 is "set frame rate" that is carried out. The IP address may likewise code the parameter such that the specific value can be set. Else one might define a command set as parameters. For instance if a parameter set is indicated by 4 and the parameter is numbered 100 the address to be sent contains 0004 0100. For ease of use this example uses a decimal system.

The present invention develops technical aspects of the application domains of IPv6 further in the direction of addressing hardware and providing specific hardware configurations. It has been surprisingly found out that IPv6 provides several technical advantages over the prior art when addressing and configuring machines as the concepts can largely contribute to an advanced addressing of machines over the network as the IPv6 addresses can be distributed over existing networks at great speeds and moreover very reliable.

Moreover, IPv6 provides technical advantages over previous versions such as IPv4 for instance when it comes to coding information. As IPv6 not support the broadcast addressing method it is of advantage in the suggested scenario according to the present invention as machines can be addressed efficiently. The present invention aims at configuration of hardware modules in a unique way such that each component can individually be addressed, not over a broadcast, which is of such efficiency regarding latency that the addressing of components can be performed at real time. Hence, hardware being security relevant is addressed almost immediately surprisingly making real time applications possible such as autonomous driving or precise control of manufacturing robots.

The protocol used for the underlying scenario is more efficient due to some design specifications for instance the size of packages may be reduces by leaving out optional header fields. The present invention enhances the scope of known protocol such that huge amounts of machine readable languages can be processed and communicated over a network.

The present invention makes use of the data fields in IPv6 that are unused and can therefore code additional payload information. For instance the IPv6 format holds so called extension headers that may hold optional information. In case this optional information is not used it can be used for the purposes of the present invention and code payload data as currently suggested. The data can be coded in the header fields and/ or even in the address fields in case not the full address range is required to address a specific receiver. As previous versions such as IPv4 required less blocks it was found out that not the full excessive range of IPv6 is required but even in the address blocks payload can be coded. Once the receiver recognizes the semantics of the address fields they can code both address and payload data. In this way payload can be transmitted in packages that are to be sent anyway and hence less bandwidth is required. The coding of information in the IPv6 headers provides an alternative solution compared to the coding in the payload sections and provides network specific advantages as the IPv6 packets are handled differently by network components.

IPv6 addresses are identifiers for single or multiple interfaces for end devices. Different treatment results from the three types of addresses. A unicast address is an identifier for a single interface. A data packet sent to the unicast address is delivered to the interface marked with this identifier. Anycast addresses are identifiers for a number of interfaces belonging to different devices. A data packet sent to an anycast address is delivered to an interface marked with this identifier. Multicast addresses identify a number of interfaces that belong to different devices. A data packet sent to a multicast address is sent to all interfaces with this identifier. Thus, there are differences in the treatment of the encodings, whether they are now sent as IPv6 signal data or as user data. This has been recognized by the present invention and accordingly encodes data in the IPv6 format. One of the contributions is that the payload data is coded in the IPv6 header instead of the payload section.

According to an aspect of the present invention the level of the block which indicates the respective command set is chosen as a function of the extent of the command set. This provides the advantage that the number of subdomains can be varied. For instance in case a large amount of instructions is to be coded several blocks can be used. In case a smaller set of instructions is to be coded. For instance if a second level block, meaning the second block from right, is chosen only one block remains for coding instructions. The higher the block, meaning the more left, the more subdomains and blocks are available. Hence, the available address space can be chosen be setting the block that codes the command set.

According to a further aspect of the present invention the level of the block which indicates the respective command set is chosen such that the number of sub-addresses of said block is larger or equals the number of control instructions of the command set. This provides the advantage that the intended coding of the instructions can indeed be performed as it is made sure that the required address space is available.

According to a further aspect of the present invention certain address ranges are reserved for indication of signaling data. This provides the advantage that unused sub-addresses can code signaling data. Signaling data describes the payload such as the instructions. This signaling data may be coded in blocks or headers.

According to a further aspect of the present invention that certain address ranges are reserved for indication of signaling data, the signaling data providing a sequence number of a respective control instruction in the data flow, an indication about the address referring to a command set; an indication about the address referring to a control instruction and/ or information about the priority of at least one control instruction. This provides the advantage that a sequence number for arranging the IPv6 addresses in the right order or the priority at which data packages are transferred over a network. Moreover, a priority at which an instruction is to be carried out can be defined.

According to a further aspect of the present invention the transmitted control flow is reassembled at a receiver using a sequence number. This provides the advantage that the receiver can put the data in the right order such that the intended control flow is carried out. This allows the present invention to assign a maximum sequence number such the receiver gets an indication at what point all instructions are received. In case that maximum number is received the receiver can start the operation of the instructions.

According to a further aspect of the present invention at least two command sets are mapped to the same representation. This provides the advantage that a universal language is defined as different concepts are mapped to one address. For instance in case an instruction "set frame rate" is implemented in different ways both implementations can be coded in the same way. In case assembler is used the same function might be available in another language such as java. If so the same number for the same instruction can be used thereby creating a common and universal language. In this case the receiver can decide which implementation of the same instruction can be used. This also applies for different versions of programming languages, where similar concepts get the same address.

According to a further aspect of the present invention the command set describes pseudo code. This provides the advantage that any code can be transmitted and the pseudo code can be translated into real code after reception.

According to a further aspect of the present invention a control instruction refers to a parameter, a natural language word, a stem and/ or a part of a word. This provides the advantage that any language can be processed, even natural language can be transmitted. The words can be normalized using stemming. For instance "going" can be defined by two parts namely "go" and "ing". In this way further processing can be performed at less effort. This refers to natural language processing which can be performed on the receiver side.

According to a further aspect of the present invention the transmitted control instructions are compiled upon reception of the full control flow by the receiver. This provides the advantage that the workload can be transferred to the receiver and that any code can be transmitted and even parts thereof.

According to a further aspect of the present invention IPv6 according to the Internet Engineering Task Force specification is used. This provides the advantage that a predefined protocol can be enhanced according to the present invention.

According to a further aspect of the present invention the command sets represent an instruction set of a machine and/ or a programming language. This provides the advantage that the machine can operated using these instructions.

The object is also solved by a system arrangement for efficient propagation of universal and machine readable control flows over a computer network, comprising an interface unit arranged to provide at least two command sets, each command set comprising control instructions for hardware components; a broker unit arranged to assign to each of the provided command sets a unique number specified in an IPv6 address block, said address block being a second level block or a higher level block; an address unit arranged to assign to each control instruction an IPv6 sub-address of said at least second level block; a logic unit arranged to arrange the IPv6 sub-addresses in a sequence that indicate a control flow for the hardware component; and a network component arranged to transmit the control flow to the hardware component for its configuration and/ or operation.

The object is also solved by a computer program product comprising instructions to cause the arrangement to execute the steps of the method as well by a computer-readable medium having stored thereon the computer program.

It is of special advantage that the method as suggested above can be executed using structural features of the suggested device and control unit. Accordingly the method teaches steps which are arranged to operate the suggested device. Furthermore, the device comprises structural features allowing the accomplishment of the suggested method. In addition a computer program and a computer program product respectively is suggested comprising instruction which perform the suggested method when executed on a computer or the device according to the present invention. Furthermore, the instructions provide means for implementing the structural features of the claimed device. Accordingly an operable image of the structural features of the device can be created. Likewise an arrangement comprising the structural device features is provided.

Wherever, structural features are provided they can likewise be established virtually thereby creating a virtual instance of physical structures. For instance a device can likewise be emulated. It may be the case that single sub steps are known in the art but the overall procedure still delivers a contribution in its entireness.

Further advantages, features and details of the invention emerge from the following description, in which aspects of the invention are described in detail with reference to the drawings. The features mentioned in the claims and in the description can each be essential to the invention individually or in any combination. The features mentioned above and those detailed here can also be used individually or collectively in any combination. Functionally similar or identical parts or components are in some cases provided with the same reference symbols. The terms "left", "right", "top" and "bottom" used in the description of the exemplary aspects relate to the drawings in an orientation with normally legible figure designation or normally legible reference symbols. The aspects shown and described are not to be understood as conclusive, but are exemplary for explaining the invention. The detailed description is provided for the information of the person skilled in the art; therefore, in the description, known circuits, structures and methods are not shown or explained in detail in order not to complicate the understanding of the present description. The invention will now be described merely by way of illustration with reference to the accompanying figures, which show:
- Figure 1:: a flow chart a computer-implemented method for efficiently propagating universal and machine readable control flows over a computer network according to an aspect of the present invention; and
- Figure 2:: an example of a representation of control instructions according to an aspect of the present invention.

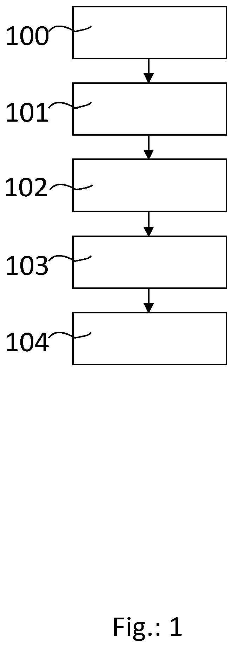

Figure 1 shows a computer-implemented method for efficiently propagating universal and machine readable control flows over a computer network, comprising the steps of providing 100 at least two command sets, each command set comprising control instructions for hardware components; assigning 101 to each of the provided command sets a unique number specified in an IPv6 address block, said address block being a second level block or a higher level block; assigning 102 to each control instruction an IPv6 sub-address of said at least second level block; arranging 103 the IPv6 sub-addresses in a sequence that indicate a control flow for the hardware component; and transmitting 104 the control flow to the hardware component for its configuration and/ or operation.

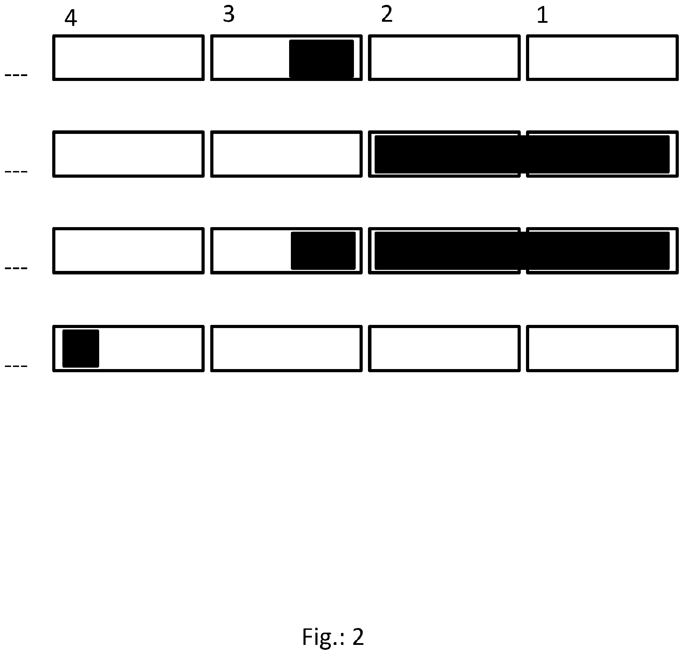

Figure 2 shows different blocks of an IPv6 address. They are numbered 1, 2, 3, 4 in ascending order starting from the right. However, these numbers are merely provided as examples. Further blocks may be included on the right and/ or on the left. The user may for instance define a command set in the third block as indicated in the first row. This offers sub-addresses in the current example of either one or two blocks. The user may for instance define that command set x is indicated and may further define, as shown in the second row, that specific instructions are coded in the right two columns. For instance assembler provides low-level machine instructions and each instruction gets a number assigned. Then the third block indicates the number for assembler and the blocks 1 and 2 hold the number for a specific instruction. Typically the name space for a programming language is big enough in case one block is used. As indicated in the third row the number of the command set and the number of the instruction is coded in the three right blocks. This can be transmitted to the receiving device.

As typically only two blocks are required to implement the present invention further information can be coded as well. This might be the address of the receiver. Moreover, signaling data can also be included, which is demonstrated in row 4.

One advantage is that existing devices are typically able to interpret internet protocols with fewer blocks such as IPv4. The present invention takes advantage of such interpretations as the four additional blocks of IPv6 may be used for a different purpose such as coding payload or the information referring to the command set or instructions.

## Claims

1. A computer-implemented method for efficiently propagating universal and machine readable control flows over a computer network, comprising the steps of:
- providing (100) at least two command sets, each command set comprising control instructions for hardware components;
- assigning (101) to each of the provided command sets a unique number specified in an IPv6 address block, said address block being a second level block or a higher level block;
- assigning (102) to each control instruction an IPv6 sub-address of said at least second level block;
- arranging (103) the IPv6 sub-addresses in a sequence that indicate a control flow for the hardware component; and
- transmitting (104) the control flow to the hardware component for its configuration and/ or operation.

2. The method according to claim 1, **characterized in that** the level of the block which indicates the respective command set is chosen as a function of the extent of the command set.

3. The method according to claim 1 or 2, **characterized in that** the level of the block which indicates the respective command set is chosen such that the number of sub-addresses of said block is larger or equals the number of control instructions of the command set.

4. The method according to any one of the preceding claims, **characterized in that** certain address ranges are reserved for indication of signaling data.

5. The method according to any one of the preceding claims, **characterized in that** certain address ranges are reserved for indication of signaling data, the signaling data providing a sequence number of a respective control instruction in the data flow, an indication about the address referring to a command set; an indication about the address referring to a control instruction and/ or information about the priority of at least one control instruction.

6. The method according to any one of the preceding claims, **characterized in that** at least two command sets are mapped to the same representation.

7. The method according to any one of the preceding claims, **characterized in that** the transmitted control flow is reassembled at a receiver using a sequence number.

8. The method according to any one of the preceding claims, **characterized in that** the command set describes pseudo code.

9. The method according to any one of the preceding claims, **characterized in that** a control instruction refers to a parameter, a natural language word, a stem and/ or a part of a word.

10. The method according to any one of the preceding claims, **characterized in that** the transmitted control instructions are compiled upon reception of the full control flow by the receiver.

11. The method according to any one of the preceding claims, **characterized in that** IPv6 according to the Internet Engineering Task Force specification is used.

12. The method according to any one of the preceding claims, **characterized in that** the command sets represent an instruction set of a machine and/ or a programming language.

13. A system arrangement for efficient propagation of universal and machine readable control flows over a computer network, comprising:
- an interface unit arranged to provide (100) at least two command sets, each command set comprising control instructions for hardware components;
- a broker unit arranged to assign (101) to each of the provided command sets a unique number specified in an IPv6 address block, said address block being a second level block or a higher level block;
- an address unit arranged to assign (102) to each control instruction an IPv6 sub-address of said at least second level block;
- a logic unit arranged to arrange (103) the IPv6 sub-addresses in a sequence that indicate a control flow for the hardware component; and
- a network component arranged to transmit (104) the control flow to the hardware component for its configuration and/ or operation.

14. A computer program product comprising instructions to cause the arrangement of claim 13 to execute the steps of the method of any one of claims 1 to 12.

15. A computer-readable medium having stored thereon the computer program of claim 14.
